(19) Europäisches Patentamt European Patent Office Office européen des brevets

(11) **EP 3 842 969 B1**

(12) **FASCICULE DE BREVET EUROPEEN**

(45) Date de publication et mention de la délivrance du brevet:
**28.01.2026 Bulletin 2026/05**

(21) Numéro de dépôt: **20214754.2**

(22) Date de dépôt: **16.12.2020**

(51) Classification Internationale des Brevets (IPC):
**G06F 21/32** *(2013.01)* **G10L 17/10** *(2013.01)*
**G10L 17/04** *(2013.01)* **G06F 18/25** *(2023.01)*
**G06V 10/50** *(2022.01)* **G06V 10/75** *(2022.01)*
**G06V 10/80** *(2022.01)* **G06V 40/40** *(2022.01)*
**G06V 40/70** *(2022.01)* **G06V 40/16** *(2022.01)*

(52) Classification Coopérative des Brevets (CPC):
**G06F 21/32; G06F 18/254; G06V 10/50;**
**G06V 10/751; G06V 10/809; G06V 40/161;**
**G06V 40/172; G06V 40/40; G06V 40/70;**
G10L 17/04; G10L 17/10

(54) **PROCEDE ET SYSTEME POUR UNE IDENTIFICATION ET UNE AUTHENTIFICATION BIOMETRIQUE AVEC TEMPLATE AUDIOVISUEL**

VERFAHREN UND SYSTEM ZUR IDENTIFIZIERUNG UND BIOMETRISCHEN AUTHENTIFIZIERUNG MIT EINEM AUDIOVISUELLEN TEMPLATE

METHOD AND SYSTEM FOR BIOMETRIC IDENTIFICATION AND AUTHENTICATION WITH AUDIOVISUAL TEMPLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2019 FR 1915527**

(43) Date de publication de la demande:
**30.06.2021 Bulletin 2021/26**

(73) Titulaire: **Imprimerie Nationale**
**75116 Paris (FR)**

(72) Inventeurs:
• **KHEMIRI, Houssemeddine**
  **78140 VELIZY-VILLACOUBLAY (FR)**
• **MALBOROUGT, Jean-Noël**
  **78140 VELIZY-VILLACOUBLAY (FR)**

(74) Mandataire: **Brun, Philippe Alexandre Georges**
**Med'inVent Consulting**
**Espace Mistral - Bât.A**
**297 avenue du Mistral**
**ZI ATHELIA IV**
**13705 La Ciotat Cedex (FR)**

(56) Documents cités:
**WO-A1-2019/216498     US-A1- 2015 379 253**

• PAVEL KORSHUNOV ET AL: "Tampered Speaker Inconsistency Detection with Phonetically Aware Audio-visual Features", 16 July 2019 (2019-07-16), XP055725419, Retrieved from the Internet <URL:https://publications.idiap.ch/downloads/papers/2019/Korshunov_AVFAKESICML_2019.pdf> [retrieved on 20200826]
• BRUTTI ALESSIO ET AL: "Online Cross-Modal Adaptation for Audio-Visual Person Identification With Wearable Cameras", IEEE TRANSACTIONS ON HUMAN-MACHINE SYSTEMS, IEEE, PISCATAWAY, NJ, USA, vol. 47, no. 1, 1 February 2017 (2017-02-01), pages 40 - 51, XP011638914, ISSN: 2168-2291, [retrieved on 20170113], DOI: 10.1109/THMS.2016.2620110

EP 3 842 969 B1

**Description**

L'invention concerne un procédé et un système permettant une identification et une authentification biométrique à partir d'un modèle ou template audiovisuel généré à partir d'une vidéo contenant des images d'un individu en train de parler. Le procédé permet à la fois une authentification de l'individu et une identification rapide avec protection contre le risque d'usurpation d'identité plus connu sous l'expression « spoofing ». Elle s'applique notamment dans le cas des usurpations par modification du contenu d'une vidéo.

De plus en plus de vidéos truquées sont diffusées sur les réseaux sociaux via Internet. La diffusion de ces vidéos modifiées peut générer des problèmes lorsque les vidéos truquées utilisent le visage d'un individu et « déforment » les paroles prononcées par cet individu. Ces trucages ont plus d'impact lorsqu'il s'agit de décideurs, par exemple, des hommes d'état ou des hommes ayant un pouvoir décisionnaire. Une panique pourrait être induite par certains trucages dans la voix et/ou dans la gestuelle, conduisant à une instabilité politique ou financière.

Le document US 2015/379253 divulgue un procédé d'authentification d'un individu dans un système de visioconférence. Toutefois, un tel enseignement technique se limite à juxtaposer des résultats d'analyses de ressemblances à partir respectivement de modèles d'authentification vocale et faciale produits séquentiellement et selon des seuils ou critères fixes. Il en découle un risque d'attaques par rejeu ou modifications de voix et/ou de visages. Le document de Pavel Korshunov ET AL: "Tampered Speaker Inconsistency Detection with Phonetically Aware Audio-visual Features",, 16 juillet 2019 (2019-07-16), XP055725419,Extrait de l'Internet:URL:https://publications.idiap.ch/downloads/pa pers/2019/ Korshunov_AVFAKESICML_2019.pdf divulgue une détection des vidéos deepfake basée sur les réseaux de neurones VGG et FaceNet, qui identifient les incohérences entre les mouvements labiaux visuels et la parole dans l'audio, ou les problèmes de qualité visuelle. Les coefficients cepstraux de fréquence Mel (MFCC) issus de la reconnaissance vocale sont utilisés pour obtenir les caractéristiques audio, et la distance entre les points de repère de la bouche est utilisée pour les caractéristiques visuelles.". Le document WO 2019/216498 A1 (LG ELECTRONICS INC [KR]) 14 novembre 2019 (2019-11-14) divulgue une vérification biométrique multimodale avec fusion des scores et des scores des méthodes anti-spoofing (anti-fraude) pour détecter la présence d'un imposteur. Des seuils sont utilisés pour classer les différents scores ou une fusion est effectuée avec l'intelligence artificielle (SVM, fusion de classifieurs). Détection de spoofing pour identifier les photographies, les masques, l'environnement et la qualité des canaux.

L'objet de la présente invention est de proposer un procédé qui permet notamment, d'apporter une sécurité élevée au niveau du contenu des vidéos, une protection contre les attaques de type rejeu (rejouer un enregistrement vidéo) ou une modification des voix et/ou de l'animation du visage. Pour cela, le procédé va générer à partir d'une vidéo d'un individu en train de parler, qui prononce une phrase aléatoire ou prédéfinie, un template audiovisuel biométrique qui contient des modèles statistiques permettant l'authentification (ou identification) faciale ou gestuelle et vocale, et une protection contre les attaques de rejeu précitées en adaptant les critères de décision au regard d'un historique des authentifications concernant l'individu objet de ladite vidéo dont on cherche à vérifier l'authenticité, voire d'informations personnelles liées à ce dernier.

A cet effet, l'invention concerne un procédé pour vérifier l'authenticité d'un flux vidéo $F_V$ contenant l'image d'un individu en train de parler comportant les étapes suivantes :

- disposer d'un template audiovisuel biométrique comportant un modèle biométrique vocal, un modèle biométrique facial, un modèle d'anti-usurpation relatif à la parole, un modèle d'anti-usurpation relatif au visage, un modèle pour la synchronie audiovisuelle,

- séparer le flux vidéo $F_V$ en un flux audio $F_A$ contenant les paramètres vocaux et un flux image $F_I$ contenant les paramètres images,

- calculer un score de vraisemblance $S_{voice}$ entre le flux audio $F_A$ et le modèle biométrique vocal,

- calculer un score de vraisemblance $S_{face}$, entre le flux image $F_I$ et le modèle biométrique facial,

- fusionner les deux scores $S_{voice}$ et $S_{face}$, après application de poids $w_{voice}$ et $w_{face}$ respectivement auxdits scores et obtenir un score fusionné $S_{fusion}$ tel que $S_{fusion} = w_{voice}S_{voice} + w_{face}S_{face}$,

- selon un seuil de décision (S1, S2) portant sur le score fusionné $S_{fusion}$ :

  ▪ rejeter le flux vidéo $F_V$

  ▪ ou :

- détecter une usurpation vocale dans le flux audio $F_A$ en utilisant le modèle d'anti-usurpation (203) relatif à la parole,

- détecter une usurpation de l'image dans le flux image $F_I$ en utilisant le modèle d'anti-usurpation relatif au visage,

- vérifier la synchronie entre le flux image $F_I$ et le flux audio $F_A$ en utilisant le modèle pour la synchronie audiovisuelle si aucune usurpation vocale ou d'image n'a été détectée, ou rejeter le flux vidéo $F_V$ dans le cas contraire ;

- authentifier le flux vidéo $F_V$ lorsque ladite synchronie est confirmée ou rejeter ledit flux vidéo $F_V$ dans le cas contraire.

Pour accroitre la robustesse d'un tel procédé, les poids $w_{voice}$ et $w_{face}$ exploités pour produire un score fusionné $S_{fusion}$ sont mis à jour préalablement au calcul dudit score fusionné $S_{fusion}$ à partir d'un historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler.

Selon un mode de réalisation avantageux, les poids $w_{voice}$ et $w_{face}$ exploités pour produire un score fusionné $S_{fusion}$ peuvent être déterminés de sorte que le poids $w_{face}$ soit supérieur au poids $w_{voice}$ si dans ledit historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler, le score de vraisemblance $S_{face}$ est supérieur au score de vraisemblance $S_{voice}$.

Pour accroître les performances d'un procédé selon l'invention, un tel procédé peut être adapté de sorte que :

- le template audiovisuel biométrique comporte des informations propres à l'individu extraites de données audiovisuelles ;
- la valeur du seuil de décision est adaptée à l'individu en train de parler dans une image contenue dans le flux vidéo Fv, à partir d'un historique d'authentification dudit individu et des informations propres audit individu contenues dans le template audiovisuel biométrique.

Le modèle biométrique vocal peut être préalablement obtenu lors d'une phase d'enrôlement, en extrayant des paramètres vocaux d'un flux audio $F_A$, tels que des coefficients cepstraux et en adaptant auxdits paramètres vocaux, un modèle choisi parmi la liste suivante :

- le modèle GMM-UBM (Gaussian Mixture Model-Universal Background Model),

- le modèle de Markov HMM (Hidden Markov Model),

- les machines à support de vecteurs ou SVM (Support Vector Machine),

- l'analyse de facteur JFA (Joint Factor Analysis),

- le vecteur identité ou "I-Vector" (Identity Vector).

Le modèle biométrique facial peut quant à lui être préalablement obtenu lors d'une phase d'enrôlement en détectant un visage ou une gestuelle d'un individu dans un flux image $F_I$ par la méthode basée sur les histogrammes de gradients orientés HOG et par une méthode d'apprentissage automatique portant sur de tels histogrammes positifs et de tels histogrammes négatifs.

L'invention prévoit que le modèle pour la synchronie audiovisuelle peut être préalablement obtenu lors d'une phase d'enrôlement en corrélant des mouvements de caractéristiques du visage ou des gestuelles de l'individu et la parole dudit individu.

Dans ce cas, ladite corrélation peut être réalisée par la technique de Co-Inertie afin de maximiser la covariance entre les paramètres visuels et acoustiques.

L'invention prévoit que l'on puisse utiliser une méthode d'apprentissage automatique pour générer le template audiovisuel biométrique. Une telle méthode d'apprentissage peut être choisie parmi la liste suivante : Gaussienne GMM, machines à support de vecteurs SVM ou réseaux neuronaux DNN.

L'invention concerne aussi un système pour vérifier l'authenticité d'un flux vidéo contenant l'image d'un individu en train de parler comportant :

- un module adapté à générer un template audiovisuel biométrique comportant un modèle biométrique vocal, un modèle biométrique facial, un modèle d'anti-usurpation relatif à la parole, un modèle d'anti-usurpation relatif au visage, un modèle pour la synchronie audiovisuelle,

- une base de données agencée pour mémoriser ledit template audiovisuel biométrique,

- un capteur multimédia configuré pour enregistrer un flux vidéo $F_V$,

- un module de séparation dudit flux vidéo $F_V$ en un flux audio $F_A$ et un flux image $F_I$,

- un dispositif de comparaison d'un flux vidéo $F_V$ avec un modèle audiovisuel biométrique mémorisé dans la base de données agencé pour :

  ○ calculer un score de vraisemblance $S_{voice}$ entre le flux audio $F_A$ et le modèle biométrique vocal,
  o calculer un score de vraisemblance $S_{face}$ entre le flux image $F_I$ et le modèle biométrique facial,
  o fusionner les deux scores $S_{voice}$ et $S_{face}$ après application de poids $w_{voice}$ et $w_{face}$ respectivement auxdits scores et obtenir un score fusionné $S_{fusion} = w_{voice}S_{voice} + w_{face}S_{face}$,
  ○ selon un seuil de décision portant sur le score fusionné $S_{fusion}$ :

    o rejeter le flux vidéo $F_V$
    ○ ou :

      ■ détecter une usurpation vocale dans le flux audio $F_A$ en utilisant le modèle d'anti-usurpation relatif à la parole,
      ■ détecter une usurpation de l'image dans le flux image $F_I$ en utilisant le modèle d'anti-usurpation relatif au visage,
      ■ vérifier la synchronie entre le flux image $F_I$ et le flux audio $F_A$ en utilisant le modèle pour la synchronie audiovisuelle si aucune usurpation vocale ou d'image n'a été détectée, ou rejeter le flux vidéo $F_V$ dans le cas contraire ;
      ■ authentifier le flux vidéo $F_V$ lorsque ladite synchronie est confirmée ou rejeter ledit flux vidéo $F_V$ dans le cas contraire.

A l'instar d'un procédé selon l'invention, un tel système est agencé de sorte que le dispositif de comparaison soit agencé pour mettre à jour les poids $w_{voice}$ et $w_{face}$ exploités pour produire un score fusionné $S_{fusion}$, préalablement au calcul dudit score fusionné $S_{fusion}$ à partir d'un historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler.

Selon un mode de réalisation avantageux, la base de données peut être agencée pour en outre mémoriser des informations propres à l'individu extraites de données audiovisuelles. Le dispositif de comparaison est alors agencé pour adapter la valeur du seuil de décision à l'individu en train de parler dans une image contenue dans le flux vidéo Fv, à partir d'un historique d'authentification dudit individu et desdites informations propres audit individu.

D'autres caractéristiques, détails et avantages de l'invention ressortiront mieux à la lecture de la description faite en référence aux dessins annexés donnés à titre d'exemple non limitatifs et qui représentent, respectivement :

Figure 1 : Un exemple de système permettant la mise en œuvre du procédé,
Figure 2 : Les étapes pour la création d'un template audiovisuel,
Figure 3 : Une image obtenue par la méthode de Hog,
Figure 4 : Une représentation d'un cadrage autour d'un visage dans une image,
Figure 5 : Une représentation des points du visage,
Figure 6 : Un exemple d'étapes pour une authentification bimodale avec un template biométrique audiovisuel.

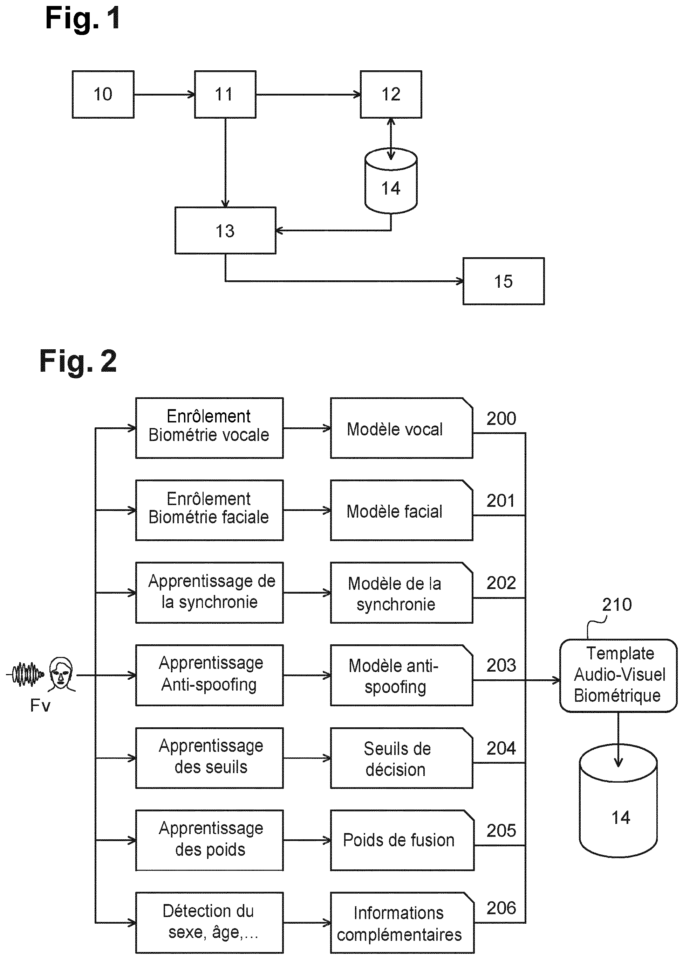

La figure 1 illustre un exemple de système comprenant un capteur multimédia 10 configuré pour enregistrer simultanément une vidéo, le flux audio et le flux image. Ces deux flux seront transmis à un dispositif comprenant un module de séparation 11 des deux flux et un module 12 adapté à générer un template audiovisuel mémorisé dans une base de données 14. Le module 12 permet notamment de construire les différents modèles explicités à la figure 2. Le système comprend pour l'étape d'authentification d'un flux vidéo $F_V$, un dispositif de comparaison 13 d'un flux vidéo avec un modèle audiovisuel biométrique mémorisé dans la base de données 14.

La sortie du comparateur 13 est reliée à un dispositif 15 permettant l'affichage du résultat ou du statut de la comparaison. Le résultat peut aussi être utilisé pour déclencher une alerte à un « Backoffice » ou vers l'utilisateur légitime en cas de fraude détectée. La fraude peut se présenter sous la forme d'une voix enregistrée ou synthétique à la place de la voix réelle, une photo rejouée, une vidéo asynchrone.

Le système va permettre d'enrôler des caractéristiques d'individus qui seront mémorisés dans la base de données 14.

A la fin de de la phase d'enrôlement on dispose de templates audiovisuels qui sont mémorisées dans la base de données et qui seront utilisés lors de la phase d'authentification des données d'un flux audiovisuel dont on souhaite vérifier l'authenticité. A l'issue de la phase de comparaison, le comparateur générera un signal d'aide à la décision, ou un statut tel qu'une acceptation lorsqu'il s'agit de la bonne personne, un refus, une usurpation ou « spoofing » ou un « Deepfake ».

Le template audiovisuel qui est généré permet d'avoir une signature biométrique, car il est généré à partir d'une scène, pour une durée donnée T et pour un individu. De la génération de ce template audiovisuel, il résulte une forme de signature biométrique de la vidéo qui permet de lutter contre différentes attaques, i.e., des attaques qui conduiraient à modifier, à déformer le contenu de la vidéo au niveau de l'image et/ou au niveau des paroles. La signature biométrique est toujours valable tant qu'elle n'est pas supprimée ou révoquée par l'individu. Cette signature permet l'authentification de l'individu et la sécurisation du flux vidéo de l'individu contre les attaques de type usurpation ou spoofing.

Une vidéo est composée d'un flux audio $F_A$ (la phrase prononcée) et d'un flux image $F_I$ (le mouvement des lèvres ou d'une partie du visage, ou encore un geste de l'individu). Le procédé va exploiter ces deux flux pour générer un template audiovisuel biométrique qui contient une quantité suffisante d'information permettant d'authentifier et de protéger l'identité biométrique de l'individu.

Un template biométrique audiovisuel contient les modèles et les informations suivantes :

- un Modèle biométrique vocal, 200,

- un Modèle biométrique facial, 201,

- un Modèle (ou matrice de projection) pour la synchronie audiovisuelle, 202,

- un Modèle anti-usurpation parole (rejeu, parole synthétique, parole transformée, etc.), 203,

- un Modèle anti- usurpation facial (rejeu, photo, masque, etc.), 204,

- des Paramètres sur seuils de décision, 205, les seuils étant utilisés pour authentifier un flux images et un flux paroles,

- des Paramètres sur les poids de fusion utilisés lors de la fusion d'un flux audio avec un flux image, 205,

- des Informations propres à l'individu extraites automatiquement des données audiovisuelles (sexe, tranche d'âge, origine, etc.), 206.

Les étapes pour créer un template audiovisuel biométrique 210 lors de la phase d'enrôlement sont exécutées par le module 12 de génération d'un modèle. L'étape d'authentification met en œuvre le comparateur 13 et la base de données 14.

Le modèle biométrique vocal, 200, est obtenu à partir du flux audio $F_A$ séparé du flux d'image $F_I$. Une étape d'extraction de paramètres vocaux pertinents est réalisée. Les paramètres vocaux généralement utilisés sont des coefficients cepstraux connus sous l'abréviation MFCC (Mel Frequency Cepstral Coefficients). Les MFCCs sont calculés par une transformée en cosinus discrète appliquée au spectre de puissance d'un signal de parole (flux audio). Les bandes de fréquence de ce spectre sont espacées selon l'échelle de Mel connue de l'homme du métier. Ces paramètres sont également exploités pour la détection de la synchronie audiovisuelle, 202. Plusieurs approches de construction de modèle biométrique vocal pourront être utilisées. Les modèles les plus utilisés et connus de l'homme du métier sont :

- le modèle GMM-UBM (Gaussian Mixture Model-Universal Background Model),

- le modèle de Markov HMM (Hidden Markov Model),

- les machines à support de vecteurs ou SVM (Support Vector Machine),

- l'analyse de facteur JFA (Joint Factor Analysis),

- le vecteur identité ou "I-Vector" (Identity Vector).

L'exemple qui suit pour illustrer l'invention utilise le modèle GMM-UBM. Un modèle UBM est un modèle statistique qui modélise l'espace acoustique des locuteurs. Cette modélisation est réalisée par une distribution multi-Gaussienne où la distribution des données est un mélange de plusieurs lois Gaussiennes. Ce modèle est appris à partir de vecteurs MFCCs, notés x, extraits des données parole de plusieurs locuteurs (i.e., données d'apprentissage). La $m^{ème}$ loi gaussienne d'un mélange $\lambda$ à $M$ composantes est paramétrée par un vecteur de moyennes $\mu_m$ de dimension D (D étant la dimension de l'espace des données, i.e., la taille du vecteur MFCC extraits), une matrice de covariance $\Sigma_m$ de dimension $D \times D$ et un poids $w_m \geq 0$. La fonction de densité de probabilité d'une telle Gaussienne s'écrit de la façon suivante :

$$P(x|\lambda) = \sum_{m=1}^{M} w_m \mathcal{N}(x|\mu_m, \Sigma_m)$$

oú

$$\mathcal{N}(x|\mu_m, \Sigma_m) = \frac{1}{\sqrt{(2\pi)^D |\Sigma_m|}} \exp\left(-\frac{1}{2}(x - \mu_m)^T \Sigma_m^{-1}(x - \mu_m)\right)$$

$$\sum_{m=1}^{M} w_m = 1$$

x un vecteur MFCC.

L'apprentissage d'un modèle UBM-GMM consiste à estimer l'ensemble des paramètres $\{\mu_m, \Sigma_m, w_m\}_{m=1}^{M}$ en utilisant un ensemble de données d'apprentissage $X = \{x_1, x_2, ..., X_T\}$, matrice de vecteurs MCC.

Cet apprentissage est basé sur une technique d'estimation par maximum de vraisemblance (MLE-Maximum Likelihood Estimation) qui fait appel à l'algorithme « Espérance-Maximisation » ou EM (Expectation-Maximization). L'algorithme EM est un algorithme itératif qui permet de maximiser la vraisemblance entre les MFCCs d'apprentissage et le modèle GMM. A une itération $i$, un nouveau modèle GMM est estimé à partir du modèle obtenu à l'itération précédente $i$-1. L'objectif est de maximiser la log-vraisemblance des données d'apprentissage $X$ par rapport au modèle $\lambda$, qui est définie comme suit :

$$LV_{moy}(X|\lambda) = \frac{1}{T} \sum_{t=1}^{T} \log P(x_t|\lambda)$$

Comme indiqué par son nom, l'algorithme EM comporte deux étapes :

- Expérance ou expectation: calcul des probabilités a posteriori les données d'apprentissage générées par les Gaussiennes :

$$P(m|x_t) = \frac{w_m \mathcal{N}(x|\mu_m, \Sigma_m)}{\sum_{g=1}^{M} w_g \mathcal{N}(x|\mu_g, \Sigma_g)}$$

- Maximisation : ré-estimation des paramètres du modèle qui maximise la vraisemblance entre les données d'apprentissage et le modèle Gaussien :

$$w_m = \frac{1}{T} \sum_{t=1}^{T} P(m|x_t)$$

$$\mu_m = \frac{\sum_{t=1}^{T}(P(m|x_t)x_t)}{\sum_{t=1}^{T} P(m|x_t)}$$

$$\sum m = \frac{\sum_{t=1}^{T}(P(m|x_t)(x_t - \mu_m)(x_t - \mu_m)^T)}{\sum_{t=1}^{T} P(m|x_t)}$$

Deux critères d'arrêt de l'algorithme sont fixés :

- La variation de la vraisemblance entre deux itérations successives,

- Un nombre maximum d'itérations.

Les paramètres initiaux du modèle (à l'itération 0) sont définis avec l'algorithme k-means connu de l'homme du métier.

La création du modèle biométrique vocal 200, propre à l'utilisateur, consiste à adapter le modèle UBM aux MFCCs extraits des données parole de cet utilisateur (extraites de la vidéo enregistrée). Cette adaptation est réalisée par une approche de maximum a priori ou MAP (Maximum A Posteriori). Elle consiste à maximiser la vraisemblance entres les MFCCs extraits des données utilisateur et l'UBM appris auparavant. Le modèle estimé selon le critère MAP est donné par :

$$\lambda^{MAP} = argmax_\lambda P(X|\lambda)P(\lambda)$$

Dans le procédé selon l'invention, seuls les vecteurs des moyennes sont adaptés. Les matrices de covariances et les poids restent inchangés.

Soit $\lambda_{UBM} = \{\mu_{UBMm}, \sum_m, w_m\}_{m=1}^{M}$, le modèle UBM et $\lambda_{SPK} = \{\mu_{SPKm}, \sum_m, w_m\}_{m=1}^{M}$, le modèle d'un locuteur SPK (Speaker). Les vecteurs des moyennes adaptés sont obtenus de la manière suivante :

$$\mu_{SPKm} = \alpha_m E_m(x) - (1 - \alpha_m)\mu_{UBMm}$$

oú

$$\alpha_m = \frac{\delta_m}{\delta_m + \rho}$$

$$E_m(x) = \frac{1}{\delta_m} \sum_{t=1}^{T} (P(m|x_t)x_t)$$

$$\delta_m = \sum_{t=1}^{T} P(m|x_t)$$

et $\rho$ un facteur empirique qui règle l'équilibre entre la distribution a priori et l'importance accordée aux données d'adaptation. Le modèle de locuteur est ensuite stocké dans le template biométrique audiovisuel, 210.

Cette modélisation vocale permet de calculer un score de vraisemblance entre les données parole d'un locuteur et un modèle vocal. Ce score est donné par la formule suivante :

$$S_{voice} = \frac{1}{T}\sum_{t=1}^{T}(\log P(x_t|\lambda_{SPK}) - \log P(x_t|\lambda_{UBM})).$$

Pour construire un modèle biométrique faciale, 201, le module de génération exécute les étapes suivantes.

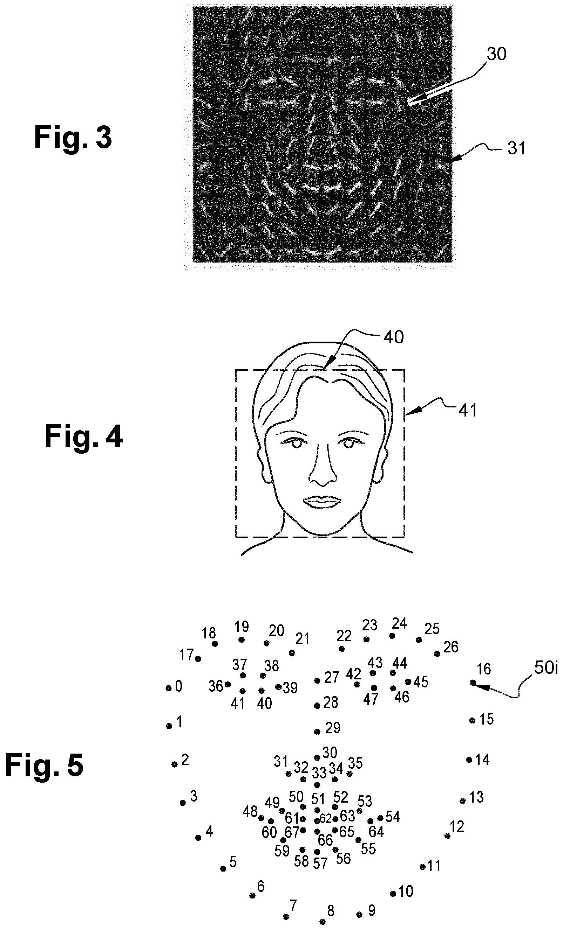

A partir du flux image enregistré par le capteur multimédia 10, le module 12 exécute une des techniques de détection du visage basées, entre autres, sur les modèles de Haar cascade (Viola & Jones), les histogrammes de gradients orientés HOG (Histogram of Oriented Gradients) ou sur des réseaux neuronaux DNN (Depp Neural Network) L'exemple est donné en utilisant un détecteur basé sur le module de HOG (intégré dans le processus de génération du modèle) utilisant un histogramme des directions de gradient ou des orientations des bords pour les pixels. Pour détecter un visage dans une image, on commence par transformer l'image au niveau de gris. Ensuite, l'image transformée est divisée en sous-images (patch) de taille *NxN* (généralement N est égale à 8 ou 16). Puis, dans chaque pixel contenu dans un « patch, » on regarde les pixels voisins (par exemple les 9 pixels qui l'entourent) et on compare l'intensité du pixel sélectionné par rapport aux pixels voisin (le but est de déterminer le pixel le plus sombre). A la fin de cette opération, pour chaque pixel d'un patch, un gradient est calculé. Le gradient est défini par une direction (l'angle vers le pixel le plus sombre) et une magnitude (l'intensité du pixel sombre, figure 3). Pour déterminer le gradient global du patch, un histogramme est calculé à partir des gradients de chaque pixel. Les classes (bins) de cet histogramme correspondent aux angles du gradient : 0,20,40,60,80,100,120,140,160. Concrètement, pour chaque gradient du pixel, on assigne la valeur de la magnitude à la classe correspondante.

Enfin, une technique d'apprentissage automatique de type « machine à vecteurs de support » ou SVM est utilisée sur des histogrammes positifs (images contenant des visages) et des histogrammes négatifs (images ne contenant pas de visages). Ceci permet d'avoir un modèle qui permet de détecter des visages dans des images.

La figure 3 illustre une image obtenue par la méthode de HOG connue de l'homme du métier et qui permet de définir un contour 30 d'un visage avec les orientations des pixels 31.

Une phase de contrôle de qualité de l'image peut être ajoutée afin de garantir une qualité optimale du visage détecté. Par exemple, le procédé va contrôler que les yeux sont ouverts, que la bouche est fermée, etc. A la fin de cette étape, on sauvegarde des coordonnées des pixels du cadre, par exemple les coordonnées des coins dans la base de données 14 du système. Comme le montre la figure 4, le visage sauvegardé 40 est défini par un cadre de sélection 41 détecté.

L'étape suivante réalisée par le module de génération d'un template consiste à calculer des points d'intérêts 50i, figure 5. Les points d'intérêts, aussi appelés « landmarks », sont relatifs aux yeux, aux sourcils, à la bouche, au nez et au contour du visage. Ces landmarks sont ensuite utilisés pour estimer la pose et l'orientation du visage. Ceci permet de centrer la zone des yeux et la bouche pour normaliser les visages détectés. A titre d'exemple, comme le montre la figure 5, le nombre de points d'intérêts extraits est égal 68.

Pour définir le modèle biométrique facial, il est possible d'utiliser la méthode des réseaux de neurones profonds (DNN-Deep Neural Network) en l'appliquant aux images contenues dans le cadre de sélection. Comme pour le modèle vocal, un modèle générique basé sur les réseaux de neurones est appris sur un ensemble d'apprentissage de visages obtenu selon des étapes décrites ci-après. Les DNN sont utilisés d'une façon non supervisée et qui déterminent les mesures les plus pertinentes. Ceci est réalisé en utilisant, simultanément, trois images :

1. visage d'apprentissage d'une personne connue,

2. visage de la même personne connue,

3. visage d'une autre personne, l'image étant obtenue à partir de bases de données publiques connues de l'homme du métier.

Ensuite, l'algorithme basé sur les DNN, génère un ensemble de mesures pour chacune des images (Il existe 128 mesures dans l'état de l'art). Plusieurs itérations sont effectuées afin que les mesures générées pour le visage d'apprentissage d'une personne connue #1 et le visage de la même personne connue #2 soient proches et les mesures effectuées pour le visage d'apprentissage d'une personne connue #1 et le visage d'une autre personne #3 soient différentes. Cette étape est réalisée sur des millions d'images avec des millions d'itérations pour obtenir des DNN performants. La projection des visages détectés sur le DNN générique permet d'obtenir un ou plusieurs modèles biométriques faciaux, qui feront partie du template audiovisuel biométrique.

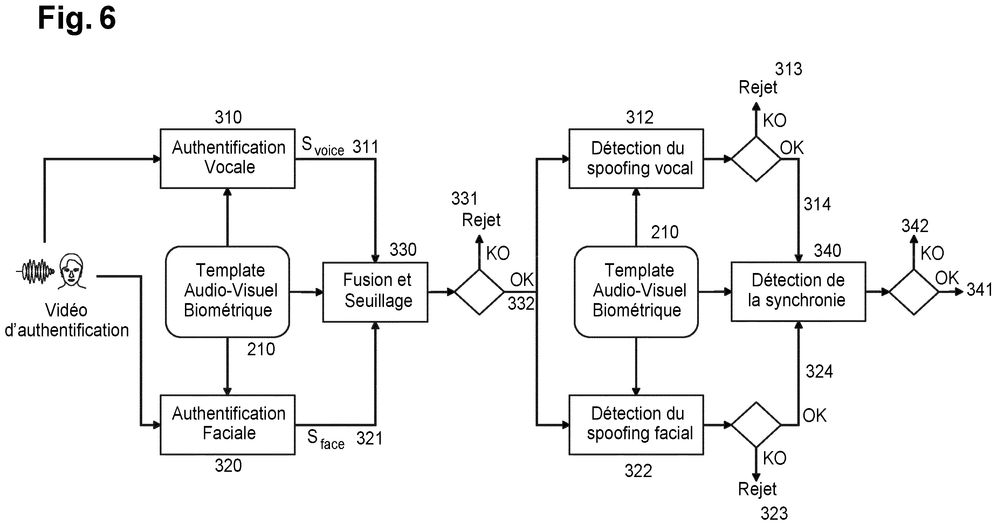

Comme pour le modèle vocal, un score de vraisemblance facial est calculé au niveau du module 12 figure 1 et du module 320 figure 6, de la façon suivante :

$$S_{face} = D(F_{enrol} - F_{test})$$

où $F_{enrol}$ et $F_{rest}$ sont, respectivement, les vecteurs contenant les mesures faciales pour le visage d'enrôlement et de visage en cours d'authentification, et D est la distance Euclidienne,

Ce modèle facial est ensuite stocké dans le template biométrique audiovisuel, 210.

Pour la génération d'un modèle pour la synchronie audiovisuelle, 202, le procédé met en œuvre une méthode de corrélation naturelle entre les mouvements des lèvres, des paupières, ou d'autres caractéristiques du visage ou d'une gestuelle de l'individu et la parole. Le modèle ainsi généré permet de vérifier si les mouvements de lèvres sont synchrones avec la parole. Afin de générer un tel modèle, des techniques basées sur de l'apprentissage automatique ou « machine learning » (GMM, HMM, DNN, etc.) ou la technique d'analyse connue de l'homme du métier sous le terme co-inertie sont utilisées.

La technique utilisée pour l'exemple est basée sur la co-inertie (CoIA). Cette technique vise à maximiser la covariance entre les paramètres acoustiques et visuels. Les paramètres acoustiques pourront être des MFCC. Les paramètres visuels pourront être des transformées de Fourrier en coordonnées discrètes ou DCT (Discret Cosine Transform).

Le but est de déterminer les directions des caractéristiques DCT et MFCC, $a \in U^n$ et $b \in U^m$ (U est le cercle unité, i.e., le module de a et b est égal à 1) telles que les projections de $X$ (MFCC) (X vecteur de MFCC) et Y (DCT) vecteur DCT sur ces deux directions maximisent leur covariance :

$$(a,b) = \underset{(a,b) \in U^n \times U^m}{\text{argmax}} cov(a^t X, b^t Y)$$

a est le vecteur propre normé correspondant à la plus grande valeur propre $\lambda_1$ de la matrice $C_{XY} C^t_{XY}$ et b est le vecteur normé colinéaire à $C^t_{XY}a$, où $C_{XY}$ est la matrice de covariance entre X et Y et $c^t_{XY}$ la transposée de $C_{XY}$.

En triant les valeurs propres par ordre décroissant, la méthode CoIA permet d'obtenir un ensemble de vecteurs orthonormaux $\{a_1, a_2, ..., \alpha_d\}$ et $\{b_1, b_2, ..., b_d\}$ (d étant le rang de $C_{XY}$).

Plus concrètement, à partir d'un flux vidéo acquis par la caméra du système et comprenant des paramètres acoustiques $X \in R^n$ et des paramètres visuels $Y \in R^m$, la co-inertie permet d'obtenir les matrices A et B :

$$A = [a_1|a_2|...|a_d] \text{ et } B = [b_1|b_2|...|b_d].$$

Ces matrices sont utilisées pour déterminer les paramètres acoustiques et les paramètres visuels corrélés $X^c$ et $Y^c$ de la manière suivante :

$$X^c = A^t X \text{ et } Y^c = B^t Y$$

de même dimension *d=min(n,m)*

$$\forall k \in \{1, ..., d\}, X_k^c = a_k^t X = \sum_{i=1}^{n} a_{ki} X_i \ et \ Y_k^c = b_k^t Y = \sum_{i=1}^{m} b_{ki} Y_i,$$

Les matrices A et B forment le *modèle de synchronie audiovisuel 202* qui est stocké dans le template audiovisuel 210.

Ce modèle de synchronie permet de calculer un score de synchronie entre les données vocales et les données visuelles et permet la détection du vivant. Ce score est exprimé par la formule suivante :

$$S_{Sync} = \frac{1}{D}\sum_{k=1}^{D} corr(X_k^c, Y_k^c) = \frac{1}{D}\sum_{k=1}^{D} \frac{X_k^{ct} Y_k^c}{\sqrt{X_k^{ct} X_k^c} \sqrt{Y_k^{ct} Y_k^c}}$$

$D \le d$ est la dimension des matrices effectivement conservées.

Afin de protéger l'individu contre les risques d'usurpation d'identité, deux modèles d'anti-usurpation (anti-spoofing) 203 relatifs à la parole et au visage sont stockés dans le template biométrique audiovisuel. Ces modèles sont générés par des méthodes d'apprentissage automatiques basées sur des GMM, SVM ou DNN.

Par exemple, une possibilité d'usurpation d'une vidéo consiste à enregistrer la parole d'une personne illégitime et présenter cet enregistrement au système de biométrie vocal. Afin de détecter ce type d'imposture, deux modèles, par exemple de type GMM, sont appris sur des données de parole légitimes et données de parole rejouées.

La séquence d'une parole rejouée est le résultat de la convolution de :

- La séquence de la parole originale avec la réponse impulsionnelle de microphone du dispositif d'enregistrement,

- Du signal parole et de la réponse impulsionnelle du haut-parleur du dispositif de rejeu,

- De la réponse impulsionnelle de la pièce dans lequel se trouve le locuteur et où la parole est enregistrée,

- De la réponse impulsionnelle de la pièce où l'attaque est réalisée.

Par conséquent, le signal rejoué est différent du point de vue acoustique du signal original ce qui permet d'obtenir deux jeux de modèles statistiques différents.

L'authentification biométrique du contenu d'un flux vidéo fait appel à des seuils de décision. Deux seuils de décision sont définis, 204 : un seuil *S1*, au-dessus duquel l'authentification de l'image est validée, un seuil *S2* qui permet de demander à l'individu de réenregistrer une vidéo d'authentification si le score est compris entre *S1* et *S2*. Ces seuils sont propres à individu, ce qui permet un taux d'authentification élevé. Les valeurs des seuils peuvent être adaptées pour chaque individu suivant son historique d'authentification et le cluster auquel il appartient (module de pondération 206 fig.2).

L'utilisation de deux modalités biométriques (vocal et facial) basées sur la parole et le visage, conduit à une fusion de scores issus de deux systèmes ($S_{voice}$ et $S_{face}$). Cette fusion nécessite d'affecter un poids pour chaque modalité (parole et visage), 205. Ces poids sont définis pour chaque individu selon la pertinence de ses modèles biométriques vocal et facial. Le score de fusion est donné par :

$$S_{fusion} = w_{voice}S_{voice} + w_{face}S_{face}$$

où $w_{voice}$ et $w_{face}$ sont, respectivement, les poids de la modalité parole et de la modalité visage. Par défaut, les poids sont égaux à 0.5, mais ces poids sont mis à jour pour chaque personne suivant la pertinence de ces modèles vocal et facial.

La pertinence est définie suivant l'historique des authentifications de l'individu. Par exemple, si dans l'historique de l'authentification d'un individu, le score pour la biométrie faciale est supérieur à celui de la biométrie vocale, un poids plus important sera donné à la modalité faciale.

Enfin, des informations relatives au sexe, tranche d'âge, langue, origine sont extraites automatiquement à partir des données parole et visage, 206. Ces informations sont obtenues avec des méthodes d'apprentissage. Par exemple, des modélisations basées sur les GMM (comme décrit auparavant) sont apprises sur des bases données annotées, par genre, tranche d'âge et origine. Ces modèles permettent de classifier chaque individu selon ces critères. Ces informations permettent de définir des clusters qui seront utiles pour accélérer le temps de traitement dans le cas d'identification d'un individu dans une base qui contient N individus.

L'usage de template audiovisuel biométrique peut soit être intégré dans un système de type ABIS (base de données) soit dans un élément sécurisé (white box crypto) d'un objet IOT (Internet of Things).

La Figure 6 illustre les étapes du procédé d'authentification bimodale avec un template biométrique audiovisuel. Le système souhaite authentifier une vidéo enregistrée par le capteur multimédia du système.

La vidéo est transmise au dispositif de séparation 11 (figure 1) du flux audio et du flux images contenant les paramètres images.

Le flux vidéo $F_A$ est transmis à un module d'authentification vocale 310 qui prend en compte le template audiovisuel mémorisé 210 pour calculer un score de vraisemblance entre le flux $F_A$ et le modèle d'authentification vocale et le transmettre à une étape de fusion et seuillage 330.

En parallèle le flux image $F_I$ est transmis au modèle d'authentification faciale 320 qui prend en compte le template audiovisuel mémorisé 210 pour calculer un score de vraisemblance entre le flux $F_I$ et le modèle d'authentification faciale et le transmettre à l'étape de fusion et seuillage 330.

Fusionner les deux scores $S_{voice}$ 311 et $S_{face}$ 321 issus du module d'authentification vocale et faciale après application d'un poids à chacun des scores.

Rejeter le flux vidéo 331 ou transmettre 332 le flux vocal au module de détection de l'usurpation vocale 312 et le flux facial au module de détection de l'usurpation image ou faciale 322 en utilisant un seuil de décision sur le score fusionné.

Utiliser le résultat de détection de l'usurpation vocale et image, faciale, 203 pour rejeter 313 ou transmettre le flux vocal 314 et le flux image 324 au module de détection de la synchronie 340.

L'étape de contrôle de la synchronie prend en compte le flux vocal et le flux image validé lors des étapes précédentes pour décider si la synchronisation entre ces deux flux existe. Lorsque les deux flux sont détectés comme synchronie, le flux vidéo est déclarée authentifié 341, sinon le flux vidéo est rejeté 342.

Lorsque la synchronie existe entre ces deux flux, par exemple entre le mouvement des lèvres et la voix, le flux audio et le flux image sont fusionnés.

Les étapes ont été décrites pour l'analyse d'un flux image contenant un visage, mais pourraient être exécutées pour un flux images contenant des images de la gestuelle de l'individu.

Dans l'étape de création du template, on stocke les deux seuils (seuil pour le vocal et seuil pour le facial). Les seuils sont déterminés en amont avec des bases de données de tests. Les deux seuils sont utilisés dans la phase d'authentification pour accepter ou rejeter une vidéo.

Par exemple, à partir d'une vidéo « deepfake », on peut vérifier l'authenticité de la vidéo d'un visage parlant en utilisant un template audiovisuel mémorisé dans un système et créé à partir de la vraie vidéo. La vérification par template audiovisuel permet de révéler la fraude sur plusieurs points : la correspondance du visage sans correspondance de la voix, l'absence de correspondance du modèle de synchronie.

Le template audiovisuel peut jouer un rôle dans l'authentification biométrique. En effet, en cas de rejet de la vidéo enrôlée à l'authentification. L'authentification sera rejetée pour un score de similarité anormale.

Un template biométrique audiovisuel permet notamment

- De fiabiliser l'identification et l'authentification par l'analyse vidéo intégrant des modèles permettant la détection d'attaque,

- Une utilisation indépendante des modalités (parole/visage) selon le niveau de sécurité requis et suivant la qualité des échantillons d'authentification,

- La détection du caractère vivant du contenu du flux vidéo, de spoofing et de rejeu (audio, visuel ou les deux),

- La fusion des modalités (fusion au niveau des scores),

- La pré-classification automatique des templates pour 1:N (éventuellement X:P).

**Revendications**

1. Procédé pour vérifier l'authenticité d'un flux vidéo $F_V$ contenant l'image d'un individu en train de parler comportant les étapes suivantes :

   - disposer (210) d'un template audiovisuel biométrique comportant un modèle biométrique vocal (200), un modèle biométrique facial (201), un modèle d'anti-usurpation (203) relatif à la parole, un modèle d'anti-usurpation (204) relatif au visage, un modèle pour la synchronie audiovisuelle (202),
   - séparer le flux vidéo $F_V$ en un flux audio $F_A$ contenant les paramètres vocaux et un flux image $F_I$ contenant les paramètres images,
   - calculer (310) un score de vraisemblance $S_{voice}$ entre le flux audio $F_A$ et le modèle biométrique vocal (200),
   - calculer (320) un score de vraisemblance $S_{face}$, entre le flux image $F_I$ et le modèle biométrique facial (201),
   - fusionner (330) les deux scores $S_{voice}$ et $S_{face}$, après application de poids $w_{voice}$ et $w_{face}$ respectivement auxdits scores et obtenir un score fusionné $S_{fusion}$ tel que $S_{fusion} = w_{voice}S_{voice} + w_{face}S_{face}$,
   - selon un seuil de décision (S1, S2) portant sur le score fusionné $S_{fusion}$ :

     o rejeter (331) le flux vidéo $F_V$
     o ou :

        ▪ détecter (312) une usurpation vocale dans le flux audio $F_A$ en utilisant le modèle d'anti-usurpation (203) relatif à la parole,
        ▪ détecter (322) une usurpation de l'image dans le flux image $F_I$ en utilisant le modèle d'anti-usurpation (204) relatif au visage,
        ▪ vérifier (340) la synchronie entre le flux image $F_I$ et le flux audio $F_A$ en utilisant le modèle pour la synchronie audiovisuelle (202) si aucune usurpation (314, 324) vocale ou d'image n'a été détectée, ou rejeter (331, 323) le flux vidéo $F_V$ dans le cas contraire ;
        ▪ authentifier (341) le flux vidéo $F_V$ lorsque ladite synchronie est confirmée ou rejeter ledit flux vidéo $F_V$ dans le cas contraire (342) ;

   les poids $w_{voice}$ et $w_{face}$ exploités pour produire un score fusionné $S_{fusion}$ sont mis à jour préalablement au calcul dudit score fusionné $S_{fusion}$ à partir d'un historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler.

2. Procédé selon la revendication 1, pour lequel les poids $w_{voice}$ et $w_{face}$ exploités pour produire un score fusionné $S_{fusion}$ sont mutuellement déterminés de sorte que le poids $w_{face}$ est supérieur au poids $w_{voice}$ si dans ledit historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler, le score de vraisemblance $S_{face}$ est supérieur au score de vraisemblance $S_{voice}$.

3. Procédé selon la revendication 1 ou 2, pour lequel :

   - le template audiovisuel biométrique comporte des informations propres à l'individu (206) extraites de données audiovisuelles ;
   - la valeur du seuil de décision (S1, S2) est adaptée à l'individu en train de parler dans une image contenue dans le flux vidéo Fv, à partir d'un historique d'authentification dudit individu et des informations propres audit individu contenues dans le template audiovisuel biométrique.

4. Procédé selon l'une quelconque des revendications 1 à 3, **caractérisé en ce que** le modèle biométrique vocal (200) est préalablement obtenu lors d'une phase d'enrôlement, en extrayant des paramètres vocaux d'un flux audio $F_A$, tels que des coefficients cepstraux et en adaptant auxdits paramètres vocaux, un modèle choisi parmi la liste suivante :

   - le modèle GMM-UBM (Gaussian Mixture Model-Universal Background Model),
   - le modèle de Markov HMM (Hidden Markov Model),
   - les machines à support de vecteurs ou SVM (Support Vector Machine),
   - l'analyse de facteur JFA (Joint Factor Analysis),
   - le vecteur identité ou "I-Vector" (Identity Vector).

5. Procédé selon l'une des revendications 1 à 3 **caractérisé en ce que** le modèle biométrique facial (201) est préalablement obtenu lors d'une phase d'enrôlement en détectant un visage ou une gestuelle d'un individu dans un flux image $F_I$ par la méthode basée sur les histogrammes de gradients orientés HOG et par une méthode d'apprentissage automatique portant sur de tels histogrammes positifs et de tels histogrammes négatifs.

6. Procédé selon l'une des revendications 1 à 5 **caractérisé en ce que** le modèle pour la synchronie audiovisuelle (202) est préalablement obtenu lors d'une phase d'enrôlement en corrélant des mouvements de caractéristiques du visage ou des gestuelles de l'individu et la parole dudit individu.

7. Procédé selon la revendication 6 **caractérisé en ce que** ladite corrélation est réalisée par la technique de Co-Inertie afin de maximiser la covariance entre les paramètres visuels et acoustiques.

8. Procédé selon l'une des revendications 1 à 7 **caractérisé en ce que** l'on utilise une méthode d'apprentissage automatique pour générer le template audiovisuel biométrique.

9. Procédé selon la revendication 8 **caractérisé en ce que** la méthode d'apprentissage est choisie parmi la liste suivante : Gaussienne GMM, machines à support de vecteurs SVM ou réseaux neuronaux DNN.

10. Système pour vérifier l'authenticité d'un flux vidéo contenant l'image d'un individu en train de parler comportant :

    - un module (12) adapté à générer un template audiovisuel biométrique comportant un modèle biométrique vocal (200), un modèle biométrique facial (201), un modèle d'anti-usurpation (203) relatif à la parole, un modèle d'anti-usurpation (204) relatif au visage, un modèle pour la synchronie audiovisuelle (202),
    - une base de données (14) agencée pour mémoriser ledit template audiovisuel biométrique,
    - un capteur multimédia (10) configuré pour enregistrer un flux vidéo $F_V$,
    - un module de séparation (11) dudit flux vidéo $F_V$ en un flux audio $F_A$ et un flux image $F_I$,
    - un dispositif de comparaison (13) d'un flux vidéo $F_V$ avec un modèle audiovisuel biométrique mémorisé dans la base de données (14) agencé pour :

      o calculer (310) un score de vraisemblance $S_{voice}$ entre le flux audio $F_A$ et le modèle biométrique vocal (200),
      o calculer (320) un score de vraisemblance $S_{face}$ entre le flux image $F_I$ et le modèle biométrique facial (201),
      o fusionner les deux scores $S_{voice}$ et $S_{face}$ après application de poids $w_{voice}$ et $w_{face}$ respectivement auxdits scores et obtenir un score fusionné $S_{fusion} = w_{voice}S_{voice} + w_{face}S_{face}$,
      o selon un seuil de décision (S1, S2) portant sur le score fusionné $S_{fusion}$ :

        ▪ rejeter (331) le flux vidéo $F_V$
        ▪ ou :

• détecter (312) une usurpation vocale dans le flux audio $F_A$ en utilisant le modèle d'anti-usurpation (203) relatif à la parole,
• détecter (322) une usurpation de l'image dans le flux image $F_I$ en utilisant le modèle d'anti-usurpation (204) relatif au visage,
• vérifier (340) la synchronie entre le flux image $F_I$ et le flux audio $F_A$ en utilisant le modèle pour la synchronie audiovisuelle (202) si aucune usurpation (314, 324) vocale ou d'image n'a été détectée, ou rejeter (331, 323) le flux vidéo $F_V$ dans le cas contraire ;
• authentifier (341) le flux vidéo $F_V$ lorsque ladite synchronie est confirmée ou rejeter ledit flux vidéo $F_V$ dans le cas contraire (342),

le dispositif de comparaison (13) est agencé pour mettre à jour les poids $w_{voice}$ et $w_{face}$ exploités pour produire un score fusionné $S_{fusion}$, préalablement au calcul dudit score fusionné $S_{fusion}$ à partir d'un historique des scores de vraisemblance $S_{voice}$ et $S_{face}$ calculés lors de mises en œuvre antérieures du procédé pour vérifier l'authenticité d'un flux vidéo $F_V$ contenant l'image de l'individu en train de parler.

11. Système selon la revendication 10, pour lequel :

- la base de données (14) est agencée pour mémoriser en outre des informations propres à l'individu (206) extraites de données audiovisuelles ;
- le dispositif de comparaison (13) est agencé pour adapter la valeur du seuil de décision (S1, S2) à l'individu en train de parler dans une image contenue dans le flux vidéo Fv, à partir d'un historique d'authentification dudit individu et desdites informations propres audit individu.

**Patentansprüche**

1. Verfahren zum Verifizieren der Authentizität eines Video-Streams $F_V$, der das Bild einer Person, die gerade spricht, enthält, umfassend die folgenden Schritte:

- Anordnen (210) einer biometrischen audiovisuellen Vorlage, umfassend ein biometrisches Stimmmodell (200), ein biometrisches Gesichtsmodell (201), ein Anti-Spoofing-Modell (203) bezogen auf die Sprache, ein Anti-Spoofing-Modell (204) bezogen auf das Gesicht, ein Modell für audiovisuelle Synchronität (202),
- Trennen des Video-Streams Fv in einen Audio-Stream $F_A$, der die Stimmparameter enthält, und einen Bild-Stream $F_I$, der die Bildparameter enthält,
- Berechnen (310) eines Wahrscheinlichkeitswerts $S_{voice}$ zwischen dem Audio-Stream $F_A$ und dem biometrischen Stimmmodell (200),
- Berechnen (320) eines Wahrscheinlichkeitswerts $S_{face}$ zwischen dem Bild-Stream $F_I$ und dem biometrischen Gesichtsmodell (201),
- Zusammenfügen (330) der zwei Werte $S_{voice}$ und $S_{face}$ nach Anwendung einer Gewichtung $w_{voice}$ und $W_{face}$ auf die jeweiligen Werte und Erhalten eines zusammengefügten Werts $S_{fusion}$, wobei $S_{fusion} = W_{voice}S_{voice} + W_{face}S_{face}$,
- gemäß einer Entscheidungsschwelle (S1, S2) bezüglich des zusammengefügten Werts $S_{fusion}$:

  ◦ Ablehnen (331) des Video-Streams Fv
  ◦ oder:

    ▪ Erkennen (312) eines Stimm-Spoofings in dem Audio-Stream $F_A$ unter Verwendung des Anti-Spoofing-Modells (203) bezogen auf die Sprache,
    ▪ Erkennen (322) eines Gesicht-Spoofings des Bilds in dem Bild-Stream $F_I$ unter Verwendung des Anti-Spoofing-Modells (204) bezogen auf das Gesicht,
    ▪ Verifizieren (340) der Synchronität zwischen dem Bild-Stream $F_I$ und dem Audio-Stream $F_A$ unter Verwendung des Modells für audiovisuelle Synchronität (202), falls kein Stimm- oder Bild-Spoofing (314, 324) erkannt wurde, oder Ablehnen (331, 323) des Video-Streams Fv im umgekehrten Fall;
    ▪ Authentifizieren (341) des Video-Streams Fv, wenn die Synchronität bestätigt ist, oder Ablehnen des Video-Streams Fv im umgekehrten Fall (342);
    wobei die Gewichtungen $W_{voice}$ und $W_{face}$, die zum Erzeugen eines zusammengeführten Werts $S_{fusion}$ genutzt werden, vor der Berechnung des zusammengeführten Werts $S_{fusion}$ aktualisiert werden, anhand einer Historie von Wahrscheinlichkeitswerten $S_{voice}$ und $S_{face}$, die während vorheriger Ausführungen des Verfahrens zum Verifizieren der Authentizität eines Video-Streams $F_V$, der das Bild der Person enthält, die gerade spricht, berechnet wurden.

2. Verfahren nach Anspruch 1, wobei die Gewichtungen $W_{voice}$ und $W_{face}$, die zum Erzeugen eines zusammengeführten Werts $S_{fusion}$ genutzt werden, gemeinsam bestimmt werden, sodass die Gewichtung $W_{face}$ größer als die Gewichtung $W_{voice}$ ist, falls in der Historie von Wahrscheinlichkeitswerten $S_{voice}$ und $S_{face}$, die während vorheriger Ausführungen des Verfahrens zum Verifizieren der Authentizität eines Video-Streams Fv, der das Bild der Person enthält, die gerade spricht, berechnet wurden, wobei der Wahrscheinlichkeitswert $S_{face}$ größer als der Wahrscheinlichkeitswert $S_{voice}$ ist.

3. Verfahren nach Anspruch 1 oder 2, wobei:

- die biometrische audiovisuelle Vorlage personenspezifische Informationen (206), die aus den audiovisuellen Daten extrahiert werden, umfasst;
- die Entscheidungsschwelle (S1, S2) an die Person angepasst wird, die in einem Bild, das in dem Video-Stream Fv enthalten ist, gerade spricht, anhand einer Authentifizierungshistorie der Person und von Informationen, die spezifisch für die Person sind, die in der biometrischen audiovisuellen Vorlage enthalten sind.

4. Verfahren nach einem der Ansprüche 1 bis 3,
**dadurch gekennzeichnet, dass** das biometrische Stimmmodell (200) zuvor während einer Registrierungsphase erhalten wird, durch Extrahieren von Stimmparametern aus einem Audio-Stream $F_A$, wie den Cepstralkoeffizienten, und durch Anpassen der Stimmparameter, wobei ein Modell aus der folgenden Liste ausgewählt wird:

- das GMM-UBM-Modell (Gaussian Mixture Model-Universal Background Model),
- das Markov-Modell HMM (Hidden Markov Model),
- die Support-Vektor-Maschinen oder SVM (Support Vector Machine),
- die Faktorenanalyse JFA (Joint Factor Analysis),
- der Identitätsvektor oder "I-Vektor" (Identity Vector).

5. Verfahren nach einem der Ansprüche 1 bis 3.
**dadurch gekennzeichnet, dass** das biometrische Gesichtsmodell (201) zuvor während einer Registrierungsphase durch Erkennen eines Gesichts oder einer Geste einer Person in einem Bild-Stream $F_I$ erhalten wird, durch die Methode basierend auf den Histogrammen orientierter Gradienten HOG und durch eine Methode des maschinellen Lernens bezüglich solcher positiver Histogramme und solcher negativer Histogramme.

6. Verfahren nach einem der Ansprüche 1 bis 5,
**dadurch gekennzeichnet, dass** das Modell für audiovisuelle Synchronität (202) zuvor während einer Registrierungsphase durch Korrelieren von Bewegungen von Gesichtszügen oder Gesten der Person und der Sprache der Person erhalten werden.

7. Verfahren nach Anspruch 6, **dadurch gekennzeichnet, dass** die Korrelation durch die Co-Inertia-Technik durchgeführt wird, um die Kovarianz zwischen den visuellen und den akustischen Parametern zu maximieren.

8. Verfahren nach einem der Ansprüche 1 bis 7,
**dadurch gekennzeichnet, dass** eine Methode des maschinellen Lernens zum Generieren der biometrischen audiovisuellen Vorlage verwendet wird.

9. Verfahren nach Anspruch 8. **dadurch gekennzeichnet, dass** die Lernmethode aus der folgenden Liste ausgewählt wird: Gauß GMM, Support-Vektor-Maschinen SVM oder neuronales Netz DNN.

10. System zum Verifizieren der Authentizität eines Video-Streams, der das Bild einer Person enthält, die gerade spricht, umfassend:

- ein Modul (12), das zum Generieren einer biometrischen audiovisuellen Vorlage angepasst ist, umfassend ein biometrisches Stimmmodell (200), ein biometrisches Gesichtsmodell (201), ein Anti-Spoofing-Modell (203) bezogen auf die Sprache, ein Anti-Spoofing-Modell (204) bezogen auf das Gesicht, ein Modell für audiovisuelle Synchronität (202),
- eine Datenbank (14), die zum Speichern der biometrischen audiovisuellen Vorlage eingerichtet ist,
- einen Multimediasensor (10), der zum Aufzeichnen eines Video-Streams Fv konfiguriert ist,

- ein Trennmodul (11) des Video-Streams Fv in einen Audio-Stream $F_A$ und einen Bild-Stream $F_I$,
- eine Vorrichtung (13) zum Vergleichen eines Video-Streams Fv mit einem biometrischen audiovisuellen Modell, das in der Datenbank (14) gespeichert ist und eingerichtet ist zum:

  o Berechnen (310) eines Wahrscheinlichkeitswerts $S_{voice}$ zwischen dem Audio-Stream $F_A$ und dem biometrischen Stimmmodell (200),
  ∘ Berechnen (320) eines Wahrscheinlichkeitswerts $S_{face}$ zwischen dem Bild-Stream $F_I$ und dem biometrischen Gesichtsmodell (201),
  o Zusammenfügen der zwei Werte $S_{voice}$ und $S_{face}$ nach Anwendung einer Gewichtung $W_{voice}$ und $W_{face}$ auf die jeweiligen Werte und Erhalten eines zusammengefügten Werts $S_{fusion}$, wobei $S_{fusion} = W_{voice}S_{voice} + W_{face}S_{face}$,
  o gemäß einer Entscheidungsschwelle (S1, S2) bezüglich des zusammengefügten Werts $S_{fusion}$:

    ▪ Ablehnen (331) des Video-Streams Fv
    ▪ oder:

  • Erkennen (312) eines Stimm-Spoofings in dem Audio-Stream $F_A$ unter Verwendung des Anti-Spoofing-Modells (203) bezogen auf die Sprache,
  • Erkennen (322) eines Gesicht-Spoofings des Bilds in dem Bild-Stream $F_I$ unter Verwendung des Anti-Spoofing-Modells (204) bezogen auf das Gesicht,
  • Verifizieren (340) der Synchronität zwischen dem Bild-Stream $F_I$ und dem Audio-Stream $F_A$ unter Verwendung des Modells für audiovisuelle Synchronität (202), falls kein Stimm- oder Bild-Spoofing (314, 324) erkannt wurde, oder Ablehnen (331, 323) des Video-Streams Fv im umgekehrten Fall;
  • Authentifizieren (341) des Video-Streams Fv, wenn die Synchronität bestätigt ist, oder Ablehnen des Video-Streams Fv im umgekehrten Fall (342),
  die Vergleichseinrichtung (13) zum Aktualisieren der Gewichtungen $W_{voice}$ und $W_{face}$ eingerichtet ist, die zum Erzeugen eines zusammengeführten Werts $S_{fusion}$ vor der Berechnung des zusammengeführten Werts $S_{fusion}$ genutzt werden, anhand einer Historie von Wahrscheinlichkeitswerten $S_{voice}$ und $S_{face}$, die während vorheriger Ausführungen des Verfahrens zum Verifizieren der Authentizität eines Video-Streams Fv, der das Bild der Person enthält, die gerade spricht, berechnet wurden.

**11.** System nach Anspruch 10, wobei:

  - die Datenbank (14) zum weiteren Speichern von personenspezifischen Informationen (206), die aus audiovisuellen Daten extrahiert werden, eingerichtet ist;
  - die Vergleichsvorrichtung (13) zum Anpassen der Entscheidungsschwelle (S1, S2) an die Person, die in einem Bild, das in dem Video-Stream Fv enthalten ist, gerade spricht, anhand einer Authentifizierungshistorie der Person und der Informationen, die spezifisch für die Person sind, eingerichtet ist.

**Claims**

**1.** Method for verifying the authenticity of a video stream $F_V$ containing the image of an individual who is speaking, comprising the following steps:

  - providing (210) a biometric audiovisual template comprising a vocal biometric model (200), a facial biometric model (201), a speech-related anti-spoofing model (203), a face-related anti-spoofing model (204), and an audiovisual synchrony model (202),
  - separating the video stream $F_V$ into an audio stream $F_A$ containing the vocal parameters and an image stream $F_I$ containing the image parameters,
  - calculating (310) a likelihood score $S_{voice}$ between the audio stream $F_A$ and the vocal biometric model (200),
  - calculating (320) a likelihood score $S_{face}$, between the image stream $F_I$ and the facial biometric model (201),
  - merging (330) the two scores $S_{voice}$ and $S_{face}$, after applying weights $w_{voice}$ and $w_{face}$ respectively to said scores, and obtaining a merged score $S_{fusion}$ such that $S_{fusion} = w_{voice}S_{voice} + w_{face}S_{face}$,
  - according to a decision threshold (S1, S2) based on the merged score $S_{fusion}$:

    ∘ rejecting (331) the video stream $F_V$
    o or:

- detecting (312) vocal spoofing in the audio stream $F_A$ using the speech-related anti-spoofing model (203),
- detecting (322) image spoofing in the image stream $F_I$ using the face-related anti-spoofing model (204),
- verifying (340) the synchrony between the image stream $F_I$ and the audio stream $F_A$ using the audiovisual synchrony model (202) if no voice or image spoofing (314, 324) has been detected, or rejecting (331, 323) the video stream $F_V$ otherwise;
- authenticating (341) the video stream $F_V$ when said synchrony is confirmed or rejecting said video stream $F_V$ otherwise (342);

the weights $w_{voice}$ and $w_{face}$ used for
producing a merged score $S_{fusion}$ are updated prior to calculating said merged score $S_{fusion}$ on the basis of a history of likelihood scores $S_{voice}$ and $S_{face}$ calculated during previous implementations of the method for verifying the authenticity of a video stream $F_V$ containing the image of the individual who is speaking.

2. Method according to claim 1, wherein the weights $w_{voice}$ and $w_{face}$ used for producing a merged score $S_{fusion}$ are mutually determined so that the weight $w_{face}$ is greater than the weight $w_{voice}$ if, in said history of likelihood scores $S_{voice}$ and $S_{face}$ calculated in previous implementations of the method for verifying the authenticity of a video stream $F_V$ containing the image of the individual who is speaking, the likelihood score $S_{face}$ is greater than the likelihood score $S_{voice}$.

3. Method according to claim 1 or 2, wherein:

- the biometric audiovisual template includes individual-specific information (206) extracted from audiovisual data;
- the value of the decision threshold (S1, S2) is adapted to the individual who is speaking in an image contained in the video stream $F_V$, on the basis of an authentication history of said individual and information specific to said individual contained in the biometric audiovisual template.

4. Method according to any one of claims 1 to 3, **characterized in that** the vocal biometric model (200) is previously obtained during an enrollment phase, by extracting vocal parameters from an audio stream $F_A$, such as cepstral coefficients, and by adapting a model selected from the following list to said vocal parameters:

- the GMM-UBM model (Gaussian Mixture Model-Universal Background Model),
- the hidden Markov model HMM,
- support vector machines or SVM,
- joint factor analysis JFA,
- the identity vector or "I-Vector".

5. Method according to one of claims 1 to 3, **characterized in that** the facial biometric model (201) is previously obtained during an enrollment phase by detecting a face or a gesture of an individual in an image stream $F_I$ by means of the method based on histograms of oriented gradients HOG and by means of a machine learning method based on such positive histograms and such negative histograms.

6. Method according to one of claims 1 to 5, **characterized in that** the audiovisual synchrony model (202) is previously obtained during an enrollment phase by correlating movements of facial features or gestures of the individual and the speech of said individual.

7. Method according to claim 6, **characterized in that** said correlation is performed by the Co-inertia technique in order to maximize the covariance between the visual and acoustic parameters.

8. Method according to one of claims 1 to 7, **characterized in that** a machine learning method is used to generate the biometric audiovisual template.

9. Method according to claim 8, **characterized in that** the learning method is selected from the following list: Gaussian GMM, vector support machines SVM or neural networks DNN.

10. System for verifying the authenticity of a video stream containing the image of an individual who is speaking, comprising:

- a module (12) suitable for generating a biometric audiovisual template comprising a vocal biometric model (200), a facial biometric model (201), a speech-related anti-spoofing model (203), a face-related anti-spoofing model (204) and an audiovisual synchrony model (202),
- a database (14) designed to store said biometric audiovisual template,
- a multimedia sensor (10) configured to record a video stream $F_V$,
- a module (11) for separating said video stream $F_V$ into an audio stream $F_A$ and an image stream $F_I$,
- a device (13) for comparing a video stream $F_V$ with a biometric audiovisual model stored in the database (14), designed to:

  ◦ calculate (310) a likelihood score $S_{voice}$ between the audio stream $F_A$ and the vocal biometric model (200),
  o calculate (320) a likelihood score $S_{face}$ between the image stream $F_I$ and the facial biometric model (201),
  o merge the two scores $S_{voice}$ and $S_{face}$ after applying weights $w_{voice}$ and $w_{face}$ respectively to said scores, and obtain a merged score $S_{fusion} = w_{voice}S_{voice} + w_{face}S_{face}$,
  o according to a decision threshold (S1, S2) based on the merged score $S_{fusion}$:

    ▪ reject (331) the video stream $F_V$
    ▪ or:

      • detect (312) voice spoofing in the audio stream $F_A$ using the speech-related anti-spoofing model (203),
      • detect (322) image spoofing in the image stream $F_I$ using the face-related anti-spoofing model (204),
      • verify (340) the synchrony between the image stream $F_I$ and the audio stream $F_A$ using the audiovisual synchrony model (202) if no voice or image spoofing (314, 324) has been detected, or reject (331, 323) the video stream $F_V$ otherwise;
      • authenticate (341) the video stream $F_V$ when said synchrony is confirmed, or reject said video stream $F_V$ otherwise (342),
      the comparison device (13) is designed to update the weights $w_{voice}$ and $W_{face}$ used to produce a merged score $S_{fusion}$ prior to calculating said merged score $S_{fusion}$ on the basis of a history of likelihood scores $S_{voice}$ and $S_{face}$ calculated during previous implementations of the method for verifying the authenticity of a video stream $F_V$ containing the image of the individual who is speaking.

11. System according to claim 10, wherein:

- the database (14) is designed to further store individual-specific information (206) extracted from audiovisual data;
- the comparison device (13) is designed to adapt the value of the decision threshold (S1, S2) to the individual who is speaking in an image contained in the video stream $F_V$, on the basis of an authentication history of said individual and said information specific to said individual.

# Fig. 1

```
┌────────┐      ┌────────┐              ┌────────┐
│   10   │─────▶│   11   │─────────────▶│   12   │
└────────┘      └────────┘              └────────┘
                     │                      ▲
                     │                      │
                     ▼                   ┌─────┐
                ┌────────┐               │ 14  │
                │   13   │◀──────────────└─────┘
                └────────┘
                     │
                     ▼
                                      ┌────────┐
                                      │   15   │
                                      └────────┘
```

# Fig. 2

```
              ┌──────────────────┐      ┌──────────────────┐
              │    Enrôlement    │─────▶│   Modèle vocal   │  200
              │ Biométrie vocale │      │                  │
              └──────────────────┘      └──────────────────┘

              ┌──────────────────┐      ┌──────────────────┐
              │    Enrôlement    │─────▶│   Modèle facial  │  201
              │ Biométrie faciale│      │                  │
              └──────────────────┘      └──────────────────┘

              ┌──────────────────┐      ┌──────────────────┐
              │  Apprentissage de│─────▶│   Modèle de la   │  202
              │   la synchronie  │      │    synchronie    │
              └──────────────────┘      └──────────────────┘
                                                                      210
              ┌──────────────────┐      ┌──────────────────┐      ┌──────────────┐
Fv  ─────────▶│   Apprentissage  │─────▶│   Modèle anti-   │  203 │   Template   │
              │   Anti-spoofing  │      │     spoofing     │─────▶│ Audio-Visuel │
              └──────────────────┘      └──────────────────┘      │  Biométrique │
                                                                  └──────────────┘
              ┌──────────────────┐      ┌──────────────────┐              │
              │   Apprentissage  │─────▶│     Seuils de    │  204         ▼
              │    des seuils    │      │     décision     │          ┌─────┐
              └──────────────────┘      └──────────────────┘          │ 14  │
                                                                      └─────┘
              ┌──────────────────┐      ┌──────────────────┐
              │   Apprentissage  │─────▶│  Poids de fusion │  205
              │     des poids    │      │                  │
              └──────────────────┘      └──────────────────┘

              ┌──────────────────┐      ┌──────────────────┐
              │   Détection du   │─────▶│    Informations  │  206
              │   sexe, âge,...  │      │  complémentaires │
              └──────────────────┘      └──────────────────┘
```

**Fig. 3**

**Fig. 4**

**Fig. 5**

**Fig. 6**

Vidéo d'authentification

310 — Authentification Vocale — $S_{voice}$ 311

210 — Template Audio-Visuel Biométrique

320 — Authentification Faciale — $S_{face}$ 321

330 — Fusion et Seuillage

331 Rejet — KO
OK — 332

312 — Détection du spoofing vocal

313 Rejet — KO
OK — 314

210 — Template Audio-Visuel Biométrique

322 — Détection du spoofing facial

323 Rejet — KO
OK — 324

340 — Détection de la synchronie

342 KO
OK — 341

EP 3 842 969 B1

## RÉFÉRENCES CITÉES DANS LA DESCRIPTION

**Documents brevets cités dans la description**

- US 2015379253 A

- WO 2019216498 A1

**Littérature non-brevet citée dans la description**

- **PAVEL KORSHUNOV et al.** *Tampered Speaker Inconsistency Detection with Phonetically Aware Audio-visual Features*, 16 July 2019